# EUROPÄISCHE PATENTANMELDUNG

(11) **EP 0 552 471 A1**
(43) Veröffentlichungstag der Anmeldung: **28.07.1993**
(21) Anmeldenummer: 92121510.9
(22) Anmeldetag: 17.12.1992
(51) Int. Cl.: H02H 9/04

(54) **Schutzschaltung für elektronische Schaltungen**

(30) Priorität: 21.01.1992 DE 4201508
(71) Anmelder: SIEMENS AKTIENGESELLSCHAFT, D-80333 München (DE)
(72) Erfinder: Lenz, Michael, W-8011 Zorneding (DE); Horchler, Wolfgang, Dipl.-Ing., W-8000 München 70 (DE); Jasberg, Hartmut, Dipl.-Ing., W-8000 München 83 (DE)

(57) **Zusammenfassung**

Es wird eine Schutzschaltungsanordnung für elektronische Schaltungen, die ein Ausgangssignal erzeugen, das einem Abfragewiderstand zugeführt wird, vorgeschlagen, die einen Thyristor aufweist, dessen Laststrecke parallel zum 2-Draht-Sensor geschaltet ist. Ein Spannungs-Strom-Umsetzer ist vorgesehen, der die am 2-DrahtSensor anliegende Spannung überwacht und ab einem bestimmten Schwellwert Strom an den Steuereingang des Thyristors liefert. Der extern vorhandene Abfragewiderstand der Stromschleifenschaltung des 2-Draht-Sensors dient zur Strombegrenzung und Verlustleistungsumsetzung bei Überspannungen.

## Beschreibung

Die Erfindung betrifft eine Schutzschaltungsanordnung für elektronische Schaltungen gemäß dem Oberbegriff des Anspruchs 1.

In verschiedenen Netzen existieren Störspannungen großer Amplituden, die insbesondere integrierte Schaltungen gefährden können. Insbesondere in Kfz-Bordnetzen können derartige Störspannungen auftreten und empfindliche elektronische Schaltungen wie z. B. 2-Draht-Sensoren zerstören. Derartige elektronische Schaltungen werden in Kfz-Bordnetzen in verschiedenen Anwendungen benutzt und erfordern besondere Schutzmaßnahmen unter dem Gesichtspunkt der Störspannungen. Die DIN 40839 beschreibt solche Störspannungen und Prüfmethoden.

Bisher wurden derartige Schaltungen durch Vorwiderstände und Parallel-Zener-Dioden geschützt. Eine andere Möglichkeit wurde dadurch geschaffen, daß die Bauelemente, z. B. 2-Draht-Sensoren, selbst hochspannungssperrend ausgelegt wurden. Beide Möglichkeiten eignen sich schlecht für eine monolithische Integration, da zum einen zu viel Leistung umgesetzt wird und zum anderen die Bauelemente sehr teuer, aber auch sehr groß werden. Dies ist unter anderem durch die Hochvolttechnologie bedingt.

Aufgabe der Erfindung ist es daher, eine Schutzschaltungsanordnung für elektronische Schaltungen anzugeben, die eine monolithische Integration ermöglicht.

Diese Aufgabe wird durch den kennzeichnenden Teil des Anspruchs 1 gelöst.

Die Erfindung wird nachfolgend anhand von drei Figuren näher erläutert. Es zeigen:
- Figur 1: ein Prinzipschaltbild der erfindungsgemäßen Schutzschaltungsanordnung für z. B. einen 2-Draht-Sensor (Signalspannung gegen Versorgungsspannung abgegriffen,
- Figur 2: ein Prinzipschaltbild wie in Figur 1 nur wird die Signalspannung gegen Masse abgegriffen,
- Figur 3: eine Ausführungsform für die erfindungsgemäße Schutzschaltungsanordnung.

Vorteil der erfindungsgemäßen Schutzschaltungsanordnung ist, daß der meist vorhandene externe Serienwiderstand bei Verwendung elektronischer Schaltungen für die Schutzschaltungsanordnung mitverwendet werden kann. Die Verlustleistung wird in diesem externen Widerstand umgesetzt.

Die elektronische Schaltung ist in den nachfolgend beschriebenen Beispiel als ein 2-Draht-Sensor angenommen. Selbstverständlich können auch andere elektronische Schaltungen vorgesehen sein, die ein Ausgangssignal erzeugen, welches einem Abfragewiderstand zugeführt wird.

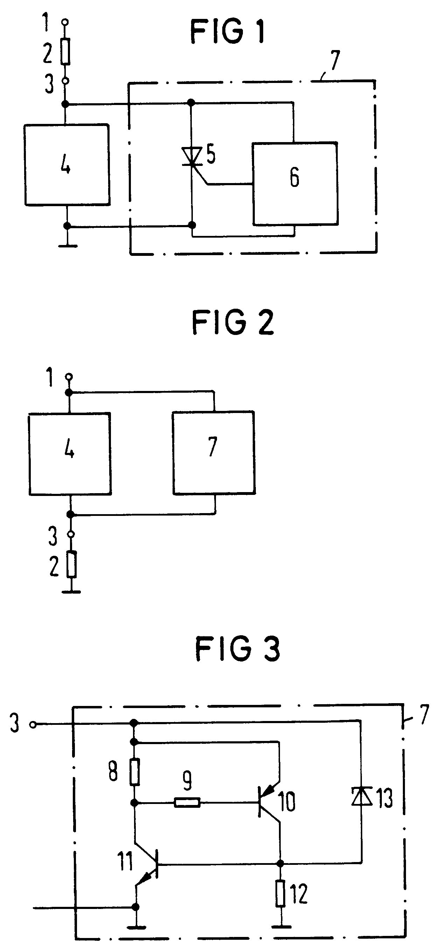

Figur 1 zeigt eine erste Anschlußklemme 1, an der die Betriebsspannung anlegbar ist. Sie ist mit dem ersten Anschluß eines Widerstands 2 verbunden. Dessen zweiter Anschluß ist mit einer zweiten Klemme 3 verschaltet. Diese ist wiederum mit dem ersten Anschluß eines 2-Draht-Sensors 4 verbunden. Der zweite Anschluß des 2-Draht-Sensors 4 ist mit Masse verbunden. Die Anschlußklemme 3 ist weiterhin mit der Anode eines Thyristors 5 verschaltet. Die Katode des Thyristors 5 ist mit Masse verbunden. Weiterhin ist ein Spannungs-Strom-Umsetzer 6 vorgesehen, dem die Spannung an der Laststrecke des Thyristors bzw. die am 2-Draht-Sensor 4 anliegende Spannung zugeführt wird. Der Spannungs-Strom-Umsetzer 6 weist einen Ausgang auf, der mit der Zündelektrode des Thyristors 5 verbunden ist. Der Thyristor 5 und der Spannungsstromumsetzer 6 bilden somit die Schutzschaltungsanordnung 7.

In Figur 2 ist der Abfragewiderstand 2 in den Massezweig des Sensors 4 geschaltet. Ansonsten entspricht Figur 2 der Figur 1.

Der 2-Draht-Sensor 4 stellt eine Stromquelle dar, die je nach detektiertem Signal den Stromwert verändert. Der 2-Draht-Sensor 4 und der Widerstand 2 bilden somit eine Stromschleife. Der Widerstand 2 dient dabei als Abfragewiderstand im Empfangsgerät. Durch ihn fließt der vom Zweidrahtsensor erzeugte Strom und an den Anschlußklemmen 1 und 3 kann von einer nachfolgenden Auswerteschaltung, die in der Figur 1 nicht näher dargestellt ist, eine zum Strom proportionale Spannung abgegriffen werden. Dabei kann der Abfragewiderstand auch in den Massezweig verlegt werden wie es insbesondere in Figur 2 dargestellt wird. Der in der Schutzschaltung vorgesehene Spannungs-StromUmsetzer 6 erzeugt bei Überspannung einen Zündstrom der dem Thyristor 5 zugeführt wird. Dadurch wird der 2-Draht-Sensor 4 bei Überspannung bis auf eine geringe Spannung durchgeschaltet. Seine Verlustleistung wird dementsprechend reduziert. Der Widerstand 2 dient dabei zur Strombegrenzung. Ist der Spannungsimpuls abgeklungen, sinkt der Strom in der Stromschleife unter den Haltestrom. Dadurch schaltet der Zweidrahtsensor 4 in den Normalbetrieb zurück. Der in der integrierbaren Schutzschaltungsanordnung 7 enthaltene Thyristor 5 weist eine definierte Zündspannung und einen definierten Zündstrom auf. Bei Überspannung wird also die Verlustleistung über die Laststrecke des Thyristors 5 und den externen Widerstand 2 umgesetzt.

Die integrierte Schutzschaltung muß lediglich so ausgelegt sein, daß sie den maximalen Thyristorstrom verträgt.

Figur 3 zeigt eine Ausführungsform der Schutzschaltungsanordnung 7 gemäß Figur 1 und 2. Die Anschlußklemme 3 führt zum ersten Anschluß eines Widerstands 8 sowie zum Emitter eines pnp-Transistors 10. Der zweite Anschluß des Widerstands 8 ist über einen Widerstand 9 mit der Basis des Transistors 10 verbunden. Weiterhin ist der zweite Anschluß des Widerstands 8 mit dem Kollektor eines npn-Transistors 11 verschaltet. Der Emitter des Transistors 11 ist mit Masse verbunden. Der Kollektor des Transistors 10 ist mit der Basis des Transistors 11 und dem ersten Anschluß eines Widerstands 12 verschaltet.

Der zweite Anschluß des Widerstands 12 ist mit Masse verbunden. Die Anordnung bestehend aus denWiderständen 8, 9, 12 und den Transistoren 10 und 11 bildet den Thyristor 5 gemäß Figur 1. Der Spannungs-Strom-Umsetzer 6 gemäß Figur 1 wird in der Ausführungsform gemäß Figur 2 durch die Zenerdiode 13 dargestellt. Deren Anode ist mit dem ersten Anschluß des Widerstands 12 und deren Kathode mit der Anschlußklemme 3 verbunden.

Die Zenerdiode definiert die Spannung bei der der Thyristor gezündet wird. Zündet der Thyristor, so sinkt die Spannung unter den nominalen Betriebsspannungswert, der bei sperrendem Thyristor vorgegeben ist.

In Kfz-Bordnetzen können auf diese Weise Spannungsspitzen bis 80 V und höher, je nach Auslegung der Schaltung, von einer zu schützenden elektronischen Schaltung ferngehalten werden.

## Patentansprüche

1. Schutzschaltungsanordnung für eine elektronische Schaltung (4), der ein Ausgangssignal erzeugt, das einem Abfragewiderstand (2) zugeführt wird,
**dadurch gekennzeichnet,** daß die Schutzschaltungsanordnung (7)
- einen Thyristor (5) aufweist, dessen Laststrecke parallel zur elektronischen Schaltung (4) geschaltet ist,
- einen Spannungs-Strom-Umsetzer (6) aufweist, der die an der elektronischen Schaltung (4) anliegende Spannung in einen Ausgangsstrom wandelt, der dem Steuereingang des Thyristors (5) zugeführt wird.

2. Schutzschaltungsanordnung nach Anspruch 1,
**dadurch gekennzeichnet,** daß der Spannungs-Strom-Umsetzer (6) eine Zenerdiode (13) ist, die zwischen Zündelektrode des Thyristors (5) und positivem Anschluß der elektronischen Schaltung (4) geschaltet ist.

3. Schutzschaltungsanordnung nach einem der Ansprüche 1 oder 2,
**dadurch gekennzeichnet,** daß der Thyristor
- einen ersten Widerstand (8) aufweist, der einerseits mit der Anode und andererseits mit dem ersten Anschluß eines zweiten Widerstands (9) und dem Kollektor eines ersten Transistors, dessen Emitter die Katode bildet, verbunden ist,
- einen zweiten Transistor (10) aufweist, dessen Emitter mit der Anode, dessen Basis mit dem zweiten Anschluß des zweiten Widerstands (9) und dessen Kollektor, der die Zündelektrode bildet, zum einen mit der Basis des ersten Transistors (11) und den ersten Anschluß eines dritten Widerstands verbunden ist.

4. Schutzschaltungsanordnung nach einem der Ansprüche 1 bis 3,
**dadurch gekennzeichnet,** daß die elektronische Schaltung ein 2-Draht-Sensor ist.
